# EUROPÄISCHE PATENTANMELDUNG

(11) **EP 0 909 586 A1**
(43) Veröffentlichungstag der Anmeldung: **21.04.1999**
(21) Anmeldenummer: 98117314.9
(22) Anmeldetag: 12.09.1998
(51) Int. Cl.: B03B 9/06, B03B 5/28

(54) **Verfahren und Vorrichtung zur Aufbereitung von Abfall**

(30) Priorität: 17.10.1997 DE 19745896
(71) Anmelder: DEUTSCHE BABCOCK ANLAGEN GMBH, 46049 Oberhausen (DE)
(72) Erfinder: Schu, Reinhard, 45133 Essen (DE)
(74) Vertreter: Radünz, Ingo, Dipl.-Ing.

(57) **Zusammenfassung**

Zerkleinerter und/oder gesiebter Abfall wird in einem Mischer mit Wasser zu einer pumpfähigen Suspension vermischt. Die Suspension wird zusammen mit den darin noch enthaltenen Schwer- und Leichtstoffe kontinuierlich aus dem Mischer abgezogen und einem getrennten Separator zugeführt, in dem die Schwer- und Leichtstoffe abgetrennt werden. Die Suspension wird anschließend mittelbar oder unmittelbar einer biologischen Nachbehandlung zugeführt.

## Beschreibung

Die Erfindung betrifft ein Verfahren zur Aufbereitung von Abfall mit den Merkmalen des Oberbegriffes des Anspruches 1 und Vorrichtung.

Ein solches Verfahren ist aus "Biologische Abfallbehandlung / Thomé-Kozmiensky. - Berlin : EF-Verlag für Energie- und Umwelttechnik, 1995, Seiten 418-421" bekannt. Der unsortierte bzw. vorsortierte und/oder zerkleinerte Abfall aus dem kommunalen und gewerblichen Bereich enthält noch leichte, aufschwimmbare Stoffe, wie Schaumstoffe und andere Plastikteile und schwere Stoffe, wie Sand oder Glasbruch, die bei der nachfolgenden biologischen Behandlung des Abfalls störend wirken. Andererseits ist für die biologischen Nachbehandlung eine homogene, pumpfähige Suspension erforderlich. Bei dem bekannten Verfahren findet die Herstellung der homogenen Suspension und die Abtrennung der schweren und leichten Störstoffe aus der Suspension in dem gleichen Aggregat bei unterschiedlichen Rührgeschwindigkeiten statt (EP-PS 639 108). Diese kombinierte Verfahrensweise führt zwangsweise zu einem diskontinuierlichen Betrieb. Ein solcher diskontinuierlicher Betrieb hat neben wirtschaftlichen auch verfahrenstechnische Nachteile. So muß beispielsweise der Reaktor der biologischen Nachbehandlung des Abfalls möglichst kontinuierlich beschickt werden, was mit Hilfe des bekannten Verfahrens nicht oder nur schwer möglich ist.

Der Erfindung liegt die Aufgabe zugrunde, das gattungsgemäße Verfahren so abzuwandeln, daß ein kontinuierlicher Betrieb möglich ist.

Diese Aufgabe wird bei einem gattungsgemäßen Verfahren erfindungsgemäß durch die kennzeichnendem Merkmale des Anspruches 1 gelöst. Vorteilhafte Ausgestaltungen der Erfindung sind in den Unteransprüchen angegeben. Eine Vorrichtung zur Durchführung des Verfahrens ist Gegenstand der Ansprüche 6 bis 9.

In dem Mischer wird unter gleichbleibender, erhöhter Rührgeschwindigkeit intensiv gerührt und so eine homogene pumpfähige Suspension hergestellt. Da in dem Mischer keine Separation vorgenommen wird, kann der Mischvorgang kontinuierlich durchgeführt werden. Die Separation der schweren und leichten Störstoffe aus der erzeugten homogenen Suspension wird von der Vermischung räumlich getrennt in dem Separator durchgeführt, den die Suspension ebenfalls kontinuierlich durchläuft. Während des Durchlaufens durch den Separator wirkt auf die Suspension nur die Schwerkraft, die die Abtrennung der schweren und leichten Störstoffe bewirkt. Der den Separator kontinuierlich verlassende Suspensionsstrom läßt sich in verfahrenstechnisch günstiger Weise dem biologischen Reaktor zuführen. Der kontinuierliche Aufbereitungsprozeß läßt den Einsatz eines kontinuierlichen Wärmetauschers für die Erwärmung des Prozeßwassers zu, der in seiner Betriebsweise günstiger ist als ein absatzweise betriebener Wärmetauscher.

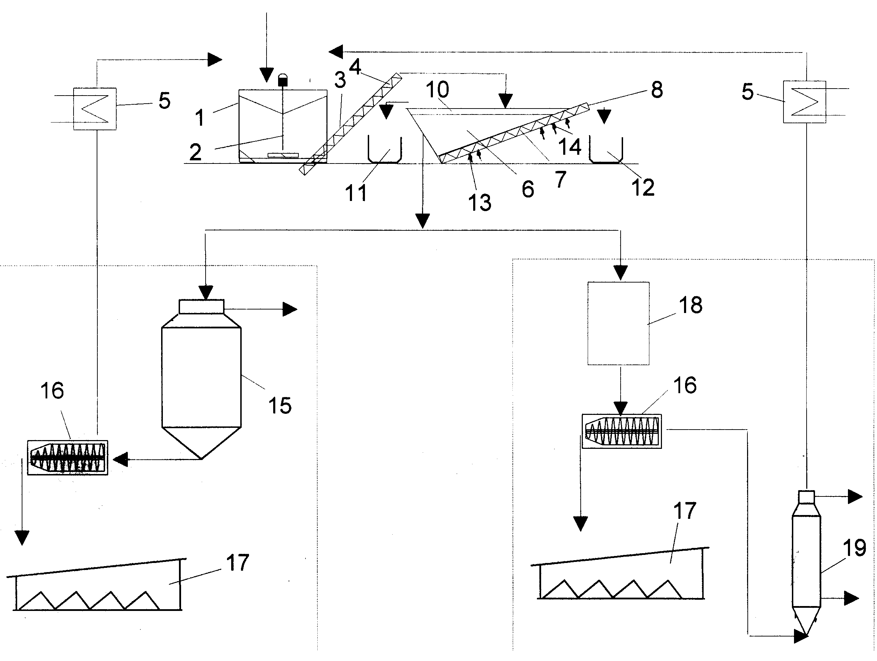

Die Erfindung sei an einem Ausführungsbeispiel und der Zeichnung näher erläutert. Die Zeichnung zeigt ein Verfahrensschema für die Aufbereitung und Nachbehandlung von Abfall.

Ein aus dem kommunalen oder gewerblichen Bereich stammender Abfall, der organische Bestandteile enthält, wird auf eine Korngröße von z. B. 30 bis 50 mm zerkleinert und/oder abgesiebt. Der feine Anteil, der einer biologischen Nachbehandlung unterworfen werden soll, enthält noch Stoffe, die nicht biologisch abbaubar sind und daher störend wirken. Diese Störstoffe sind aus dem Abfall zu entfernen, und der Abfall muß für die biologische Nachbehandlung zu einer homogenen, pumpfähigen Suspension aufbereitet werden. Die Aufbereitung und die Abtrennung der Störstoffe erfolgt auf die nachfolgend beschriebene Weise.

Der Abfall wird zusammen mit Wasser in einen Mischer 1 in einem solchen Verhältnis gegeben, daß eine pumpfähige Mischung mit einem Feststoffgehalt von etwa 5 bis 20% entsteht. Der Mischer 1 ist mit einem Rührwerk 2 versehen. Das Rührwerk 2 wird mit einer solchen Rührgeschwindigkeit betrieben, daß eine homogene pumpfähige Suspension entsteht. Aus dem Mischer 1 wird die so hergestellte homogene Suspension kontinuierlich über einen Überlauf 3 abgeführt. Zur Vermeidung von Verstopfungen kann in den Überlauf 3 eine Austragsvorrichtung 4, z. B. ein Ketten- oder Schneckenförderer integriert sein.

Das zur Herstellung der homogenen pumpfähigen Suspension erforderliche Wasser ist Prozeßwasser, das in der später beschriebenen biologischen Nachbehandlung anfällt. Dieses Wasser muß eine erhöhte Temperatur von etwa 60 bis 90 °C aufweisen. Das Erwärmen des Wassers erfolgt in einem Röhrenwärmetauscher 5, der von dem zu erwärmenden Wasser kontinuierlich durchströmt wird. Wasserverluste werden durch die Zufuhr von ebenfalls erwärmten Frisch- oder Brauchwasser ersetzt.

Die den Mischer 1 verlassende homogene Suspension enthält noch Störstoffe. Die Störstoffe werden in einem räumlich von dem Mischer 1 getrennten Separator 6 aus der Suspension abgetrennt. Der Separator 6 ist als Absetzbecken ausgebildet und mit einem geneigten Boden 7 versehen. In dem Boden 7 ist ein mechanisches Austragsorgan in Form einer Austragsschnecke 8 angeordnet. Die Austragsschnecke 8 ragt über den maximalen Flüssigkeitsspiegel hinaus. Auf der Seite der größten Höhe ist der Separator 6 unterhalb des Flüssigkeitsspiegels mit einem Flüssigkeitsablauf 9 versehen. Die Suspension wird an dem dem Flüssigkeitsablauf 9 abgewandten Ende in den Separator 6 kontinuierlich eingespeist und über den Flüssigkeitsablauf 9 kontinuierlich abgezogen. Während des Durchlaufens durch den Separator 6 zerfällt die zunächst homogene Suspension in gewollter Weise teilweise, wobei die spezifisch leichten Stoffe nach oben aufschwimmen und die spezifisch schweren Stoffe nach unten absinken.

Die aufsteigenden, leichten Stoffe bilden an der Oberfläche eine Schwimmschicht 10, die abgeblasen oder mechanisch abgezogen wird. Die leichten Stoffe werden in einen Container 11 aufgefangen. Es ist darauf zu achten, daß der Flüssigkeitsablauf 9 gerade so hoch angebracht ist, daß er sich stets unterhalb der Schwimmschicht 10 befindet.

Die sich an dem Boden 7 des Separators 6 sammelnden schweren Stoffe werden über die Austragsschnecke 8 in einen bereit stehenden Container 12 ausgetragen. In dem vorderen Bereich der Austragsschnecke 8 sind Düsen 13 angeordnet, über die Luft zur Verbesserung des Absetz- und Aufschwimmverhaltens der Störstoffe eingeblasen wird. In dem Endbereich der Austragsschnecke 8 wird im Gegenstrom zu den schweren Stoffe über Düsen 14 Wasser eingeblasen. Durch diese Gegenstromwäsche werden die auszutragenden schweren Stoffe von verwertbaren organischen Bestandteilen gereinigt.

Die in der oben geschilderten Weise von den schweren und den leichten Störstoffen befreite homogene Suspension, die nun im wesentlichen nur noch biologisch abbaubare Bestandteile enthält, wird einer biologischen Nachbehandlung zugeführt. Hierzu sind zwei Varianten vorgesehen.

Gemäß der in der Zeichnung links dargestellten Varianten wird die Suspension einen Vergärungsreaktor 15 zugeführt, in dem die Suspension in Biogas und Kompost umgewandelt wird. Der zunächst noch stark wasserhaltige Kompost wird in einem Entwässerungsaggregat 16 eingedickt und kann anschließend einer aeroben Nachbehandlungsanlage 17 zugeführt werden. Das in der Entwässerungsaggregat 16 anfallende Wasser wird als Prozeßwasser zu dem Mischer 1 zurückgeführt.

Gemäß der in der Zeichnung rechts dargestellten Varianten wird die Suspension kontinuierlich einem Hydrolysereaktor 18 zugeführt. In diesem Hydrolysereaktor 18 wird zunächst unter Luftabschluß eine teilweise Hydrolyse der Suspension durchgeführt. Dabei entstehen organische Säure, in denen sich im Abfall vorhandene Schwermetalle lösen. Durch eine zeitweise Zuführung von Luft wird die Bildung von Biogas unterdrückt. Die so teilweise hydrolysierte Suspension wird in einem nachgeschalteten Entwässerungsaggregat 16 entwässert. Der dabei anfallende Schlamm wird einer biologischen Nachbehandlungsanlage 17 zugeführt, in der er aerob zu Kompost umgesetzt wird. Die aus dem Entwässerungsaggregat 16 austretende flüssige Phase wird einem biologischen Reinigungsreaktor 19 zugeführt und dort anaerob zu verwertbarem Biogas, zu einem Klarlauf und zu einem Schwermetalle enthaltenden Schlamm umgesetzt, der entsorgt werden muß. Der Klarlauf wird über einen Wärmetauscher 5 zu dem Mischer als Prozeßwasser zurückgeführt.

## Patentansprüche

1. Verfahren zur Aufbereitung von Abfall, wobei der Abfall zerkleinert und/oder gesiebt wird, der Feinanteil in einem Mischer mit Wasser zu einer pumpfähigen Suspension vermischt wird, aus der Schwer- und Leichtstoffe abgetrennt werden und die Suspension einer biologischen Nachbehandlung unterworfen wird, dadurch gekennzeichnet, daß die Suspension zusammen mit den darin noch enthaltenen Schwer- und Leichtstoffe kontinuierlich aus dem Mischer abgezogen und einem getrennten Separator zugeführt wird, daß in dem getrennten Separator die Schwer- und Leichtstoffe abgetrennt werden und daß die Suspension mittelbar oder unmittelbar der biologischen Nachbehandlung zugeführt wird.

2. Verfahren nach Anspruch 1 unter Verwendung eines Separators, der mit einem geneigten Boden versehen ist, in dem ein mechanisches Austragsorgan angeordnet ist, dadurch gekennzeichnet, daß durch den unteren Teil des Austragsorgan Luft und durch den oberen Teil des Austragsorgan Wasser hindurchgeblasen wird.

3. Verfahren nach Anspruch 1 oder 2, dadurch gekennzeichnet, daß das dem Mischer zugeführte Wasser im kontinuierlichen Durchfluß durch einen Wärmetauscher erwärmt wird.

4. Verfahren nach einem der Ansprüche 1 bis 3, dadurch gekennzeichnet, daß die Suspension aus dem Separator einer Vergärung zugeführt und vergärt wird, daß der Austrag aus der Vergärung entwässert wird und daß die flüssige Phase kontinuierlich über einen Wärmetauscher dem Mischer zugeführt wird.

5. Verfahren nach einem der Ansprüche 1 bis 3, dadurch gekennzeichnet, daß die Suspension aus dem Separator einem alternierend belüfteten Hydrolysereaktor zugeführt und teilweise hydrolysiert wird, daß der Austrag aus dem Hydrolysereaktor entwässert wird, daß der entwässerte Schlamm einer aeroben Nachbehandlung und die flüssige Phase einer anaeroben Reinigung unterworfen wird.

6. Vorrichtung zur Durchführung des Verfahrens nach einem der Ansprüche 1 bis 5, mit einem Mischer (1) zur Herstellung der homogenen Suspension und mit einem dem Mischer (1) nachgeschalteten Separator (6) zur Abtrennung von spezifisch schweren und leichten Stoffen aus der Suspension, dadurch gekennzeichnet, daß der Mischer (1) und der Separator (6) räumlich voneinander getrennt, durch einen Überlauf (3) miteinander verbunden und kontinuierlich von der Suspension durchströmt sind.

7. Vorrichtung nach Anspruch 6, dadurch gekennzeichnet, daß der Separator (6) mit einem geneigten Boden (7) versehen ist, in dem eine Austragsschnecke (8) angeordnet ist und daß in dem vorderen und dem hinteren Bereich der Austragsschnecke (8) Düsen (13, 14) für die Zufuhr von Luft oder Wasser angeordnet sind.

8. Vorrichtung nach Anspruch 5 oder 6, dadurch gekennzeichnet, daß der Flüssigkeitsablauf (9) der Separators (6) mit dem Eingang eines Vergärungsreaktor (15) verbunden ist.

9. Vorrichtung nach Anspruch 5 oder 6, dadurch gekennzeichnet, daß der Flüssigkeitsablauf (9) der Separators (6) mit dem Eingang eines Hydrolysereaktors (18) verbunden ist, dem ein Entwässerungsaggregat (16) nachgeschaltet ist, dessen Schlammaustrag mit einer biologischen aeroben Nachbehandlungsanlage (17) und dessen Flüssigkeitsaustrag mit einer biologischen anaeroben Reinigung (19) verbunden ist.
